# EUROPEAN PATENT APPLICATION

(11) **EP 4 422 333 A1**
(43) Date of publication of application: **28.08.2024**
(21) Application number: 21960856.9
(22) Date of filing: 18.10.2021
(51) Int. Cl.: H04W 76/10

(54) **COMMUNICATION METHOD AND COMMUNICATION APPARATUS UNDER MULTIPLE LINKS**

(71) Applicant: Beijing Xiaomi Mobile Software Co., Ltd., Beijing 100085 (CN)
(72) Inventor: DONG, Xiandong, Beijing 100085 (CN)
(74) Representative: Kudlek, Franz Thomas
(86) International application number: PCT/CN2021/124517
(87) International publication number: WO 2023/065095

(57) **Abstract**

Provided in the present disclosure are a communication method and communication apparatus under multiple links. The communication method may comprise: determining a first message frame under a first link of multiple links, wherein the first message frame comprises a status code information bit, which is used for indicating a status acknowledgement of an establishment request for at least one received connection; and sending the first message frame.

## Description

### TECHNICAL FIELD

The present disclosure relates to the field of wireless communication, and more specifically, to multi-link communication methods and communication apparatuses.

### BACKGROUND

At present, a research scope of Wi-Fi technology is: bandwidth transmission of 320 MHz, aggregation and collaboration of multiple frequency bands, etc. It is expected to improve a speed and throughput by at least four times compared with existing standards, and its main application scenarios are video transmission, augmented reality (AR), virtual reality (VR), etc.

The aggregation and collaboration of multiple frequency bands (links) refers to simultaneous communication between devices in frequency bands such as 2.4 GHz, 5 GHz, and 6 GHz. It is necessary to define a new media access control (MAC) mechanism to manage the simultaneous communication between devices in multiple frequency bands. In addition, it is expected that the aggregation and collaboration of multiple frequency bands can support low-latency transmission.

At present, a maximum bandwidth supported by aggregation and collaboration of multiple frequency bands technology is 320 MHz (160 MHz+160 MHz), and the technology may also support 240 MHz (160 MHz+80 MHz) and other bandwidths.

In current technology, an access point (AP) and a station (STA, which can also be called a non-AP STA) can be multi-link devices (MLDs), and they support a function of sending and/or receiving in multi-links (multiple links). Therefore, in the current technology, multiple links can exist between the STA and the AP, and a communication between these two devices in multi-links is being studied.

### SUMMARY

Aspects of the present disclosure will solve at least the above problems and/or disadvantages. Various embodiments of the present disclosure provide the following technical solutions.

According to an example embodiment of the present disclosure, a multi-link communication method is provided. The communication method can be performed by an access point supporting multi-link communication, and includes: determining a first message frame in a first link among multi-links, where the first message frame includes a status code, and the status code indicates a status acknowledgement of a received setup request for at least one link; and sending the first message frame.

According to an example embodiment of the present disclosure, a multi-link communication method is provided. The communication method can be performed by a non-access point supporting multi-link communication, and includes: receiving a first message frame in a first link among multi-links, where the first message frame includes a status code, and the status code indicates a status acknowledgement of a received setup request for at least one link; and performing a communication operation based on the first message frame.

According to an example embodiment of the present disclosure, a multi-link communication apparatus is provided. The communication apparatus can be applied to an access point supporting multi-link communication, and includes: a processing module, configured to determine a first message frame in a first link among multi-links, where the first message frame includes a status code, and the status code indicates a status acknowledgement of a received setup request for at least one link; and a transceiving module, configured to send the first message frame.

According to an example embodiment of the present disclosure, a multi-link communication apparatus is provided. The communication apparatus can be applied to a non-access point supporting multi-link communication, and includes: a transceiving module, configured to receive a first message frame in a first link among multi-links, where the first message frame includes a status code, and the status code indicates a status acknowledgement of a received setup request for at least one link; and a processing module, configured to perform a communication operation based on the first message frame.

According to an example embodiment of the present disclosure, an electronic apparatus is provided. The electronic apparatus includes a memory, a processor and a computer program stored in the memory and operable on the processor. The processor, when executing the computer program, implements the method as described above.

According to an example embodiment of the present disclosure, a computer-readable storage medium is provided. A computer program is stored on the computer-readable storage medium. The computer program, when executed by a processor, implements the method as described above.

Example embodiments of the present disclosure provide technical solutions that can be adapted for multi-link communication and improve spectrum utilization.

### BRIEF DESCRIPTION OF DRAWINGS

The above and other features of embodiments of the present disclosure will be more apparent by describing in detail example embodiments of the present disclosure with reference to the accompanying drawings, in which:
FIG. 1 is an exemplary schematic diagram illustrating a multi-link communication scenario.
FIG. 2 is a flowchart illustrating a multi-link communication method according to an embodiment of the present disclosure.
FIG. 3 is a flowchart illustrating a multi-link communication method according to an embodiment of the present disclosure.
FIG. 4 is a block diagram illustrating a multi-link communication apparatus according to an embodiment of the present disclosure.

### DETAILED DESCRIPTION

The following description with reference to the accompanying drawings is provided to help a comprehensive understanding of various embodiments of the present disclosure as defined by the appended claims and their equivalents. Various embodiments of the present disclosure include various specific details, which are to be considered as exemplary only. In addition, for the sake of clarity and conciseness, descriptions of well-known technologies, functions and configurations may be omitted.

The terms and words used in the present disclosure are not limited to written meanings, but are only used by inventors to enable a clear and consistent understanding of the present disclosure. Therefore, for those skilled in the art, the description of various embodiments of the present disclosure is provided for illustrative purposes only, and not for limiting purposes.

It should be understood that singular forms "a", "an", "said" and "the" used herein may also include plural forms unless the context clearly indicates otherwise. It should be further understood that the word "including" used in the present disclosure refers to a presence of the described features, integers, steps, operations, elements and/or components, but does not exclude a presence or addition of one or more other features, integers, steps, operations, elements, components and/or groups thereof.

It will be understood that although terms "first", "second" and the like may be used herein to describe various elements, these elements should not be limited by these terms. These terms are only used to distinguish one element from another. Therefore, a first element discussed below may be referred to as a second element without departing from the teaching of example embodiments.

It should be understood that when an element is referred to as "connected" or "coupled" to another element, it may be directly connected or coupled to the other element, or there may be intermediate elements. Furthermore, "connected" or "coupled" as used herein may include wireless connection or wireless coupling. Term "and/or" or expression "at least one/at least one of ......" as used herein includes any and all combinations of one or more of items listed therein.

Unless otherwise defined, all terms (including technical terms and scientific terms) used herein have the same meaning as commonly understood by ordinary technicians in the field to which the present disclosure belongs.

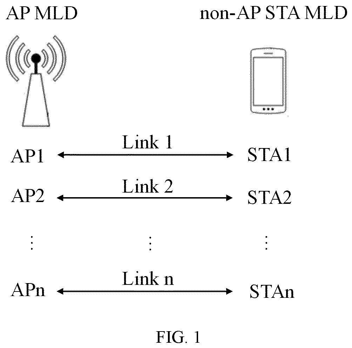

FIG. 1 is an exemplary schematic diagram illustrating a multi-link communication scenario.

In a wireless local area network, a basic service set (BSS) can be composed of an AP and one or more stations (STAs) communicating with the AP. A basic service set can be connected to a distribution system (DS) through its AP, and then access to another basic service set to form an extended service set (ESS).

The AP may be a wireless network switch used in a wireless network and may also be an access device of a wireless network. An AP can be used as a wireless base station, which is mainly used as a bridge to connect a wireless network to a wired network. With this access point (AP), the wired network and wireless network can be integrated.

The AP may include software applications and/or circuits, so that other types of nodes in the wireless network can communicate with outside and inside of the wireless network through the AP. In some examples, as an example, the AP may be a terminal device or a network device equipped with a wireless fidelity (Wi-Fi) chip.

As an example, a station (STA) may include, but is not limited to, a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, and the like.

In an example embodiment of the present disclosure, an AP and a STA may devices supported multi-link, for example, they may be represented as an AP MLD and a non-AP STA MLD, respectively. For convenience of description, in the following, an example in which an AP MLD communicates with a non-AP STA MLD in multi-links is mainly described, however, example embodiments of the present disclosure are not limited to this.

In FIG. 1, by way of example only, an AP MLD may represent an access point supporting a multi-link communication (traffic) function, and a non-AP STA MLD may represent a station supporting a multi-link communication (traffic) function. Referring to FIG. 1, AP MLD can operate in n links, such as AP1, AP2 to APn as shown in FIG. 1, and non-AP STA MLD can also operate in n links, such as STA1, STA2 to STAn as shown in FIG. 1, where n is a natural number greater than 1. In an example of FIG. 1, it is assumed that AP1 and STA1 communicate through a corresponding first link: Link 1, and similarly, AP2 to APn communicate with STA2 to STAn through a second link: Link 2 to an n-th link: Link n, respectively. In addition, Link 1 to Link n can be multiple links at different frequencies, for example, links at 2.4 GHz, 5 GHz and 6 GHz, etc., or several links with same or different bandwidths at 2.4 GHz, 5 GHz, 6 GHz. In addition, multiple channels can exist in each link. However, it should be understood that the communication scenario shown in FIG. 1 is only exemplary, and a concept of the present disclosure is not limited to this. For example, an AP MLD may be linked to a plurality of non-AP STA MLDs, or an AP may communicate with a plurality of other types of stations in each link. In addition, although it is shown in FIG. 1 that both AP MLD and non-AP STA MLD may have n links, the present disclosure is not limited to this, and the number of links that AP MLD and non-AP STA MLD may be different.

If a station wants to communicate with an access point in various links, the station needs to set up an association with the access point, and the access point will reply whether the station has successfully set up an association. However, there is a lack of mechanism to realize this association in multi-link communication in the prior art. In view of this, a communication method and a communication apparatus in multiple links are provided according to example embodiments of the present disclosure.

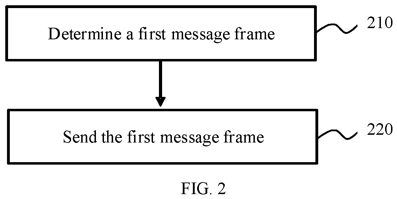

FIG. 2 is a flowchart illustrating a multi-link communication method according to an embodiment of the present disclosure. The communication method shown in FIG. 2 can be applied to an access point supporting multi-link communication, for example, the AP MLD shown in FIG. 1.

Referring to FIG. 2, at step 210, a first message frame can be determined in a first link among multi-links, where the first message frame may include a status code, and the status code indicates a status acknowledgement of a received setup request for at least one link. At step 220, the first message frame can be sent, for example, the first message frame can be sent to a corresponding affiliated station of a non-AP STA MLD in the first link.

According to an embodiment of the present disclosure, the multi-links may be multiple links supported by the AP MLD (e.g., n links supported by the AP MLD as shown in FIG. 1), the first link may be one of multiple links (one of n links supported by the AP MLD as shown in FIG. 1), and the at least one link may be a link in which the AP MLD is associated with the non-AP STA MLD among multi-links.

In an embodiment of the present disclosure, there are many ways to determine the first message frame. For example, the first message frame can be generated according to at least one of the following situations: a network situation, a load situation, a hardware capability of a sending/receiving device, a service type, and relevant protocol provisions, and the embodiment of the present disclosure is not particularly limited. In an embodiment of the present disclosure, the first message frame can further be acquired from an external device, and the embodiment of the present disclosure is not particularly limited.

According to an embodiment of the present disclosure, the first message frame may be, for example, an association response frame, a re-association response frame, a multi-link setup response frame, or a multi-link re-setup response frame, etc. However, the present disclosure is not limited to this, and various other types of frames may also be included in various embodiments of the present disclosure. For example, the AP MLD may receive, from the non-AP STA MLD, an association request frame for setting up an association link with the AP MLD in at least one link, where the association request frame may include a request for requesting to set up an association link with the AP MLD in at least one link. The AP MLD may reply to the association response frame, and include a status code in the association response frame, where the status code may be determined according to the association request frame, and the status code identifies a status acknowledgement of the received setup request for the at least one link, for example, identifies whether a station and an access point have successfully set up an association in the at least one link.

For example, the first message frame may include at least one status code (status code information bit) respectively corresponding to at least one link, so as to identify a status acknowledgement of the setup request in each of the at least one link. For example, a status acknowledgement identified by the status code may include success, refused (including refused reason) and the like. An embodiment in which the status code is included in the first message frame will be described in detail below.

According to an embodiment of the present disclosure, the first message frame may include a multi-link element (multi-link information element), where the status code may be included in the multi-link element. For example, the multi-link element may include a per-sta profile subelement (per-station profile sub information element) corresponding to each of the at least one link, where the status code may be included in the per-sta profile subelement. This message will be described below.

As an example, a format of the multi-link element may be as shown in Table 1 below.

**Table 1. Multi-Link Element**

| Element ID | Length | Element ID Extension | Multi-Link Control | Common Info | Link Info |
|---|---|---|---|---|---|
| Octet: 1 | 1 | 1 | 2 | variable | variable |

In Table 1, the Element ID field, the Length field, and the Element ID Extension field can respectively represent identification information, length information, and extended element identification information of the multi-link element. The Multi-Link Control field may include a Type subfield distinguishing each variant of the multi-link element, a Presence Bitmap subfield indicating a presence of each subfield in the Common Info field, etc. The Common Info field can carry information common to all links, etc. The Link Info field can carry specific information of a link and information that presents optionally based on a value of the Type subfield of the multi-link element. For example, the Link Info field may include zero or more subelements, for example, at least one per-sta profile subelement may be included, and the status code may be included in the per-sta profile subelement. Furthermore, it will be understood that the number of Octets of each field shown in Table 1 is only exemplary, and is not a limitation of the present disclosure.

In combination with the embodiment of FIG. 1, if the non-AP STA MLD requests to set up an association link with the AP MLD in Link 1, Link 2 and Link 3, the AP MLD can determine status codes corresponding to Link 1, Link 2 and Link 3, respectively, and each status code is included in a corresponding per-sta profile subelement, e.g., a status code corresponding to Link 1 may be included in a per-sta profile subelement of Link 1, a status code corresponding to Link 2 may be included in a per-sta profile subelement of Link 2, and a status code corresponding to Link 3 may be included in a per-sta profile subelement of Link 3. For the convenience of description, a format of a single status code in a corresponding per-sta profile subelement is described below with reference to Table 2 and Table 3.

As an example, a per-sta profile subelement may have a format as shown in Table 2 below.

**Table 2. Per-STA Profile subelement**

| | | | | |
|---|---|---|---|---|
| Subelement ID | Length | STA Control | STA Info | STA Profile |

In Table 2, the Subelement ID field and the Length field can respectively represent identification information and length information of the per-sta profile subelement. The per-sta profile subelement may further include the STA Control field, the STA Info field, and the STA Profile field.

In an embodiment of the present disclosure, the status code may be included in the STA Info field (station information field). The STA Info field consists of zero or more fields whose presence is indicated by subfields of the STA Control field. The subfields in the STA Info field appear in the same order as their corresponding presence subfield in the STA Control field. For example, the STA Control field may include a bit that identify a presence of status code in the STA Info field. As an example, the STA Control field may have a format as shown in Table 3 below.

**Table 3. STA Control field**

| | | | | | | | |
|---|---|---|---|---|---|---|---|
| Link ID | Complete Profile | MAC Address Present | Beacon Interval Present | DTIM Info Present | NSTR Link Pair Present | Status code Present | Reserved |

In Table 3, the Link ID (identity) can identify a corresponding link. For example, the Link ID can have multiple bits to identify combined information of operating spectrum, bandwidth/channel, and basis service set identifier (BSSID). For example, when the per-sta profile subelement corresponds to Link 1, the Link ID can identify Link 1, for example, the combined information of operating spectrum, bandwidth/channel, and basis service set identifier (BSSID) of Link 1. The STA Control field may include a Status code Present subfield, which represents a bit that identify a presence of status code in the STA Info field. In addition, the STA Control field may further include the Complete Profile subfield, the MAC Address Present subfield, the Beacon Interval Present subfield, the DTIM Info Present subfield, the NSTR Link Pair Present subfield, and the Reserved. It will be understood that a content of the STA Control field shown in Table 3 is only exemplary, and embodiments of the present disclosure are not limited to this. For example, some subfields may be omitted from Table 3, or more other subfields may be included.

According to an embodiment of the present disclosure, if the Status code is contained in the STA Info field, it can be identified by one bit in the STA Control field (the bit is set at any bit position in the STA Control field or the last bit is set as the bit), for example, this bit can be identified by the "Status code Present" bit as shown in Table 3. When the "Status code Present" bit is set to "1", it may indicate that there is a Status code in the STA Info field. When the "Status code Present" bit is set to "0", it may indicate that there is no Status code in the STA Info field; or the "Status code Present" bit may be omitted, in which case this bit may be a "reserved" bit.

In an embodiment where the status code is included in the STA Info field and its presence is identified in the STA Control field, a parser (for example, a station receiving the first message frame) can first parse the STA Control field to obtain a presence and position of the status code in the STA Info field, so as to further parse the STA Info field to obtain the status code and increase the accuracy of parsing. However, the present disclosure is not limited to this. For example, a "Status code" subfield may be set in the STA Info subfield regardless of a setting of the STA Control subfield.

In another embodiment of the present disclosure, the status code may be included in a STA Profile field. For example, the status code can be set at a first position in the STA Profile field, so that the parser can know a position of the status code more quickly and then parse the status code. However, the present disclosure is not limited to this, and it is also feasible to set the status code at any other position in the STA Profile field.

According to an embodiment of the present disclosure, the status code may have a plurality of bits (e.g., but not limited to two octets) for identifying various acknowledgement states. For example, the status code located in the STA Info field or the status code located in the STA Profile field can be set to SUCCESS to indicate that an association between the station and the access point is successfully set up in a corresponding link. Or, the status code can be set to REFUSED to identify that an association between the station and the access point is unsuccessfully set up in a corresponding link. In this case, a reason for refused (rejection) can be identified in the status code.

For example, at least one link requesting to set up an association may include a first link for determining and sending a first message frame (refer to step 220) and other link(s) except the first link, and setting(s) of status code(s) of other link(s) is associated with a setting of status code of the first link. Specifically, for example, when a status code corresponding to the first link is set to refused, a status code corresponding to a link other than the first link among the at least one link may be set to refused. In this case, the status code may include a reason for refused. For example, when a status code corresponding to the first link is set to success, a status code corresponding to a link other than the first link among the at least one link is set arbitrarily.

For example, if a Status code set in a link that sends the first message frame (association response frame, re-association response frame, multi-link setup response frame, or multi-link Re-setup response frame) is "REFUSED or DENIED" or other "REFUSED WITH SOME REASONS", Status code(s) in other link(s) may be set to "REFUSED or DENIED" or "REFUSED DUE TO ASSOCIATED LINK REASON". For example, if a Status code set in a link that sends the first message frame (association response frame, re-association response frame, multi-link setup response frame, or multi-link Re-setup response frame) is "SUCCESS", Status code(s) in other link(s) can be set arbitrarily, for example, it can be set to "SUCCESS", "REFUSED or DENIED", "REFUSED WITH SOME REASONS", etc.

In some implementations, when a Status code in another link is set to "REFUSED DUE TO ASSOCIATED LINK REASON", when performing multi-links again, a multi-link setup can be performed in the link set to "REFUSED DUE TO ASSOCIATED LINK REASON".

In some implementations, when a Status code in another link is set to "REFUSED or DENIED", when performing multi-links again, a multi-link setup may or may not be performed in the link set to "REFUSED or DENIED".

In an embodiment of the present disclosure, a status code of at least one link that needs to set up an association may be located at the same position, e.g., all may be located in a per-sta profile subelement as described with reference to Tables 1 to 3. For example, the status code of the first link that sent the first message frame and the status code(s) of other link(s) can be included in a corresponding per-sta profile subelement. In this way, the status code can be carried in a simple coding and decoding way.

However, the present disclosure is not limited thereto. In another embodiment of the present disclosure, a status code of the first link sending the first message frame may be located in different positions from status codes of other links.

For example, the status code of the first link sending the first message frame may be located in a frame body of the first message frame, while status codes of other links may be located in a per-sta profile subelement as shown in Tables 1 to 3. Such an approach may enhance the compatibility of status codes, for example, it can be compatible with a station that supports a single link traffic. For example, in the case that the first message frame is an association response frame, the position of the status code of the first link sending the first message frame in the association response frame may be as shown in Table 4 below.

**Table 4. Frame Body of Association Response Frame**

| Order | Information |
|---|---|
| 1 | Capability Information |
| 2 | Status code |
| 3 | AID (association identification) |
| ...... | ...... |

It will be understood that the information of the association response frame and the order of the respective information shown in Table 4 are only exemplary, and the present disclosure is not limited thereto.

It can be understood that each element in Tables 1 to 4 exists independently, and these elements are listed in the same table by way of example, but it does not mean that all elements in the table must exist at the same time as shown in the table. Each element value is independent of any other element value in Tables. Therefore, it can be understood by those skilled in the art that each element value in Tables of the present disclosure is an independent embodiment.

The communication method shown in FIG. 2 is only exemplary, and the present disclosure is not limited to this. For example, as mentioned above, the communication method shown in FIG. 2 may further include: receiving an association request frame from a non-AP STA MLD before step 210, and at step 210, determining a first message frame and a status code in a corresponding link based on the association request frame and/or a hardware configuration and/or load of an AP MLD.

The communication method according to the embodiment of the present disclosure enables a device to obtain a status of whether each link is successfully set up or not during a multi-link setup process, thereby improving a spectrum utilization rate.

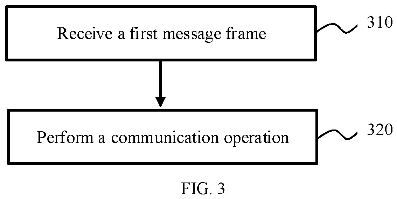

FIG. 3 is a flowchart illustrating a multi-link communication method according to an embodiment of the present disclosure. The communication method shown in FIG. 3 can be performed by a non-access point supporting multi-link communication, for example, the non-AP STA MLD shown in FIG. 1.

Referring to FIG. 3, at step 310, a first message frame can be received in a first link among multi-links, where the first message frame may include a status code, and the status code may indicate a status acknowledgement of a received setup request for at least one link.

According to an embodiment of the present disclosure, the first message frame may include a multi-link element, where the status code may be included in the multi-link element.

According to an embodiment of the present disclosure, the multi-link element may include a per-sta profile subelement corresponding to each of the at least one link, where the status code may be included in the per-sta profile subelement.

According to an embodiment of the present disclosure, the per-sta profile subelement may include a STA Info field, where the status code may be included in the STA Info field.

According to an embodiment of the present disclosure, the per-sta profile subelement may include a STA Control field, where the STA Control field may include a bit identifying a presence of the status code in the STA Info field.

According to an embodiment of the present disclosure, the per-sta profile subelement may include a STA Profile field, where the status code may be included in the STA Profile field.

According to an embodiment of the present disclosure, when a status code corresponding to the first link is set to refused, a status code corresponding to a link other than the first link among the at least one link may be set to refused.

According to an embodiment of the present disclosure, when a status code corresponding to the first link is set to success, a status code corresponding to a link other than the first link among the at least one link is set arbitrarily.

The multi-link, the first link, the at least one link, the first message frame, the multi-link element, the per-sta profile subelement, the STA Info field, the STA Control field, the STA Profile field, the status code, etc. in step 310 may be similar to the embodiments described above with reference to FIG. 2 and Tables 1 to 4, and repeated descriptions are omitted here for brevity.

At step 320, a communication operation can be performed based on the first message frame. For example, when a corresponding station receives the first message frame, it can parse the status code in the first message frame to know whether an association link is successfully set up in each link. For example, when the status code of the corresponding link identifies success, the station may know that the association link has been successfully set up in the link, so that data and various information can be transmitted in the link. For example, when the status code of the corresponding link identifies refused, the station may know that the association link was not successfully set up in the link, and may attempt to re-initiate the association link in this link (e.g., based on a reason for refusal), or may temporarily refrain from communicating with the access point in this link.

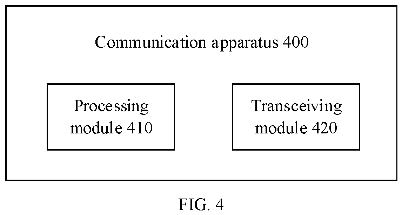

FIG. 4 is a block diagram illustrating a multi-link communication apparatus according to an embodiment of the present disclosure.

Referring to FIG. 4, a communication apparatus 400 may include a processing module 410 and a transceiving module 420. The communication apparatus shown in FIG. 4 can be applied to an access point (AP MLD) that supports multi-link communication or a non-access point (non-AP STA MLD) that supports multi-link communication.

In the case that the communication apparatus shown in FIG. 4 is applied to an access point (AP MLD) that supports multi-link communication, the processing module 410 can be configured to: determine a first message frame in a first link among multi-links, where the first message frame includes a status code, and the status code indicates a status acknowledgement of a received setup request for at least one link; and the transceiving module 420 can be configured to: send the first message frame. In this case, the communication apparatus 400 can execute the communication method described with reference to FIG. 2, and the embodiments of multi-link, first link, at least one link, first message frame, status code described with reference to FIG. 2 and Tables 1 to 4 can be applied here, and repeated descriptions are omitted here for brevity.

In the case that the communication apparatus shown in FIG. 4 is applied to a non-access point (non-AP STA MLD) that supports multi-link communication, the transceiving module 420 can be configured to: receive a first message frame in a first link among multi-links, where the first message frame includes a status code, and the status code indicates a status acknowledgement of a received setup request for at least one link; and the processing module 410 can be configured to perform a communication operation based on the first message frame. In this case, the communication apparatus 400 can execute the communication method described with reference to FIG. 3, and the embodiments of multi-link, first link, at least one link, first message frame, status code described with reference to FIG. 3 and Tables 1 to 4 can be applied here, and repeated descriptions are omitted here for brevity.

In addition, the communication apparatus 400 shown in FIG. 4 is only exemplary, and the embodiment of the present disclosure is not limited to this. For example, the communication apparatus 400 may also include other modules, such as a memory module. In addition, each module in the communication apparatus 400 may be combined into a more complex module or may be divided into more individual modules.

The communication method and communication apparatus according to the embodiment of the present disclosure enables a device to obtain a status of whether each link is successfully set up or not during a multi-link setup process, thereby improving a spectrum utilization rate.

Based on the same principle as the method provided by the embodiment of the present disclosure, the embodiment of the present disclosure further provides an electronic device, which includes a processor and a memory; where the memory stores a machine-readable instruction (which may also be referred to as a "computer program"); and a processor is configured to execute the machine-readable instruction to implement the methods described with reference to FIGS. 2 and 3.

An embodiment of the present disclosure further provides a computer-readable storage medium having a computer program stored thereon, which when executed by a processor implements the methods described with reference to FIGS. 2 and 3.

In an example embodiment, the processor may be a logic block, module and circuit for implementing or executing various examples described in connection with the present disclosure, for example, a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. The processor can also be a combination that realizes computing functions, for example, including one or more microprocessor combinations, DSP and microprocessor combinations, etc.

In an example embodiment, the memory may be, for example, a read only memory (ROM), a random access memory (RAM), an electrically erasable programmable read only memory (EEPROM), a compact disc read only memory (CD-ROM) or other optical disc storage, optical disc storage (including compact disc, laser disc, optical disc, digital versatile disc, Blu-ray disc, etc.), magnetic disc storage medium or other magnetic storage devices, or any other medium that can be used to carry or store program codes in the form of instructions or data structures and can be accessed by a computer, but is not limited to this.

It should be understood that although the various steps in the flowchart of the accompanying drawings are shown sequentially as indicated by the arrows, the steps are not necessarily performed sequentially in the order indicated by the arrows. Unless explicitly stated herein, the execution of these steps is not strictly limited in order, and they can be executed in other orders. In addition, at least a part of the steps in the flowchart of the accompanying drawings may include a plurality of sub-steps or stages, which may not necessarily be completed at the same time, but may be executed at different times, and the execution order may not necessarily be sequential, but may be executed alternately or alternatively with other steps or at least a part of sub-steps or stages of other steps.

While the present disclosure has been shown and described with reference to certain embodiments of the present disclosure, those skilled in the art will appreciate that various changes in form and detail can be made without departing from the scope of the present disclosure. Therefore, the scope of the present disclosure should not be limited by the embodiments, but should be defined by the appended claims and their equivalents.

## Claims

1. A multi-link communication method, performed by an access point supporting multi-link communication, comprising:
determining a first message frame in a first link among multi-links, wherein the first message frame comprises a status code, and the status code indicates a status acknowledgement of a received setup request for at least one link; and
sending the first message frame.

2. The communication method according to claim 1, wherein the first message frame comprises a multi-link element, wherein the status code is comprised in the multi-link element.

3. The communication method according to claim 2, wherein the multi-link element comprises a per-sta profile subelement corresponding to each of the at least one link,
wherein the status code is comprised in the per-sta profile subelement.

4. The communication method according to claim 3, wherein the per-sta profile subelement comprises a station, STA, Info field,
wherein the status code is comprised in the STA Info field.

5. The communication method according to claim 4, wherein the per-sta profile subelement comprises a STA Control field,
wherein the STA Control field comprises a bit identifying a presence of the status code in the STA Info field.

6. The communication method according to claim 3, wherein the per-sta profile subelement comprises a STA Profile field,
wherein the status code is comprised in the STA Profile field.

7. The communication method according to any one of claims 1 to 6, wherein, when a status code corresponding to the first link is set to refused, a status code corresponding to a link other than the first link among the at least one link is set to refused.

8. The communication method according to any one of claims 1 to 6, wherein, when a status code corresponding to the first link is set to success, a status code corresponding to a link other than the first link among the at least one link is set arbitrarily.

9. A multi-link communication method, performed by a non-access point supporting multi-link communication, comprising:
receiving a first message frame in a first link among multi-links, wherein the first message frame comprises a status code, and the status code indicates a status acknowledgement of a received setup request for at least one link; and
performing a communication operation based on the first message frame.

10. The communication method according to claim 9, wherein the first message frame comprises a multi-link element, wherein the status code is comprised in the multi-link element.

11. The communication method according to claim 10, wherein the multi-link element comprises a per-sta profile subelement corresponding to each of the at least one link,
wherein the status code is comprised in the per-sta profile subelement.

12. The communication method according to claim 11, wherein the per-sta profile subelement comprises a station, STA, Info field,
wherein the status code is comprised in the STA Info field.

13. The communication method according to claim 12, wherein the per-sta profile subelement comprises a STA Control field,
wherein the STA Control field comprises a bit identifying a presence of the status code in the STA Info field.

14. The communication method according to claim 11, wherein the per-sta profile subelement comprises a STA Profile field,
wherein the status code is comprised in the STA Profile field.

15. The communication method according to any one of claims 9 to 14, wherein, when a status code corresponding to the first link is set to refused, a status code corresponding to a link other than the first link among the at least one link is set to refused.

16. The communication method according to any one of claims 9 to 14, wherein, when a status code corresponding to the first link is set to success, a status code corresponding to a link other than the first link among the at least one link is set arbitrarily.

17. A multi-link communication apparatus, applied to an access point supporting multi-link communication, comprising:
a processing module, configured to determine a first message frame in a first link among multi-links, wherein the first message frame comprises a status code, and the status code indicates a status acknowledgement of a received setup request for at least one link; and
a transceiving module, configured to send the first message frame.

18. A multi-link communication apparatus, applied to a non-access point supporting multi-link communication, comprising:
a transceiving module, configured to receive a first message frame in a first link among multi-links, wherein the first message frame comprises a status code, and the status code indicates a status acknowledgement of a received setup request for at least one link; and
a processing module, configured to perform a communication operation based on the first message frame.

19. An electronic apparatus, comprising a memory, a processor and a computer program stored in the memory and executable on the processor, wherein the processor, when executing the computer program, implements the method according to any one of claims 1 to 8 or any one of claims 9 to 16.

20. A computer-readable storage medium, wherein a computer program is stored on the computer-readable storage medium, and the computer program, when executed by a processor, implements the method according to any one of claims 1 to 8 or any one of claims 9 to 16.
